# EUROPÄISCHE PATENTSCHRIFT

(11) **EP 1 050 948 B1**
(45) Veröffentlichungstag und Bekanntmachung des Hinweises auf die Patenterteilung: **08.09.2004**
(21) Anmeldenummer: 00108613.1
(22) Anmeldetag: 20.04.2000
(51) Int. Cl.: H02K 3/52

(54) **Stator für eine elektrische Maschine und Verfahren zur Herstellung eines Stators**
Stator for an electrical machine and method for manufacturing such a stator
Stator pour machine électrique et procédé de fabrication d'un tel stator

(30) Priorität: 03.05.1999 DE 19920127
(43) Veröffentlichungstag der Anmeldung: 08.11.2000
(73) Patentinhaber: ZF Sachs AG, 97424 Schweinfurt (DE)
(72) Erfinder: Baumeister, Jens, Dipl.-Ing., 97422 Schweinfurt (DE); Bauch-Panetzky, Dieter, Dipl.-Ing., 4940 Bascharage (LU); Krause, Peter, 97456 Dittelbrunn (DE); Oppitz, Horst, Ing., 97456 Dittelbrunn (DE); Grau, Edmund, 97490 Poppenhausen (DE); Schmitt, Bernhard, Dipl.-Ing. (FH), 97535 Wasserlosen (DE); van Heyden, Markus, Dipl.-Ing., 97422 Schweinfurt (DE); Sonnenburg, Reinhard, Dr., 97702 Münnerstadt (DE); Ochs, Martin, Dr., 69190 Walldorf (DE); Tareilus, Alfred, Dipl.-Ing., 97422 Schweinfurt (DE); Weimer, Jürgen, Dipl.-Ing., 97502 Euerbach (DE)

(56) Entgegenhaltungen:
- EP-A- 0 777 312
- WO-A-97/11514
- DE-A- 2 320 865

## Beschreibung

Die vorliegende Erfindung betrifft einen Stator für eine elektrische Maschine, mit einem Statorjoch, einer am Statorjoch angeordneten Anzahl von Statorspulen und einer an einer Stirnseite des Statorjochs angeordneten Verschaltungsanordnung für die Statorspulen, wobei die Verschaltungsanordnung elektrisch gegeneinander isolierte Verbindungsleiter aufweist, die konzentrisch zueinander angeordnet sind und jeweils einen unterschiedlichen Durchmesser aufweisen und wobei die Verbindungsleiter Anschlüsse für die Enden der Statorspulen sowie zur Verbindung mit der elektrischen Maschine aufweisen. Weiterhin betrifft die Erfindung ein Verfahren zur Herstellung eines solchen Stators

Bekannte Statoren für elektrische Maschinen weisen in der Regel eine Anzahl von Statorzähnen auf, auf die die Statorspulen gewickelt sind. Die Spulen sind einzelnen Strängen zugeordnet, wobei die einem gemeinsamen Strang zugeordneten Spulen verschaltet sind. Im Fall einer Drehstrommaschine weist der Stator drei Stränge auf, die jeweils um 120° phasenversetzt mit Strom beaufschlagt werden. Die Stromzuleitung und die Stromableitung der einzelnen Spulen werden an einem Statorende aus der elektrische Maschine herausgeführt.

Bisher war es üblich, die Verschaltung der einzelnen Spulen von Hand durchzuführen. Dabei wurden die einzelnen Spulenenden zu den jeweiligen Anschlüssen zur Verbindung mit der elektrischen Maschine geführt und dort kontaktiert. Diese Art der Verschaltung weist jedoch eine Reihe von Nachteilen auf. So entstehen durch die separate Verschaltung der einzelnen Spulen mit den entsprechenden Anschlüssen zur Verbindung mit der elektrischen Maschine dicke Kabelbäume, die sehr viel Platz benötigen. Ein großes Platzangebot steht jedoch nur in den seltensten Fällen zur Verfügung. Wenn ein Stator der genannten Art beispielsweise in einem Fahrzeug verwendet werden soll, steht im Motorraum in der Regel nur ein sehr begrenztes Platzangebot zur Verfügung, so daß hier Bestrebungen im Gange sind, die einzelnen, im Motorraum verwendeten Komponenten möglichst klein und platzsparend zu gestalten.

Weiterhin müssen die einzelnen Drähte der Spulenenden sorgfältig gegeneinander isoliert werden, was zusätzliches Isolationsmaterial erfordert und damit zu einer weiteren Erhöhung des erforderlichen Bauraums führt. Schließlich besteht auch die Gefahr, daß bei der Zuordnung und entsprechenden Verschaltung der Spulenenden Fehler unterlaufen können. Auf Grund der Vielzahl von Drähten ist nur schwer zu ermitteln, wenn eine Spule, und wenn dieser Fall eintritt, welche der Spulen falsch verschaltet wurde. Entsteht in der Verschaltungsanordnung ein Kurzschluß, so ist diese Defektstelle im Regelfall nur schwer zu lokalisieren.

Darüber hinaus ist die bekannte Verschaltungsanordnung auch sehr kosteninten siv, da die Verschaltung von Hand ausgeführt werden muß. Eine Automatisierung des Verfahrens zur Herstellung solcher Verschaltungsanordnungen ist nicht möglich, so daß sich die bekannten Verschaltungsanordnungen nicht für die Serienfertigung eignen.

Aus der DE 195 44 830 A1 ist ein Stator für elektrische Maschinen bekannt, wie er im Oberbegriff von Patentanspruch 1 beschrieben ist. Bei diesem Stator entfällt die Einzelverschaltung der jeweiligen Spulen mit den Anschlüssen zur Verbindung mit der elektrischen Maschine. Statt dessen werden elektrisch gegeneinander isolierte Verbindungsleiter vorgeschlagen, die als Ringleiter ausgebildet sind und in einer isolierenden Nutkonstruktion konzentrisch und mit unterschiedlichem Durchmesser angeordnet sind. Die einzelnen Spulenenden werden über Fortsätze mit den Verbindungsleitern verbunden, wobei die Fortsätze aus dem Verschaltungsanordnungskörper herausragen. Durch diesen bekannten Stator wird zwar die aufwendige Einzelverschaltung der einzelnen Spulen verhindert, jedoch weist auch dieser Stator eine Reihe von Nachteilen auf.

So ist auch für diesen Stator ein relativ hoher Platzbedarf erforderlich, da die Verschaltungsanordnung in axialer Richtung vor den Spulen angeordnet ist. Weiterhin sind die zum Anschluß der Spulenenden an den Verbindungsleitern vorgesehenen Fortsätze in starrer Weise senkrecht zu den Verbindungsleitern ausgerichtet, so daß hierdurch ein zusätzlicher Platzbedarf für die Verschaltungsanordnung und damit auch für den gesamten Stator erfolgt.

Aus der DE 196 47 559 A1 ist eine elektrische Maschine mit einem mit Spulen versehenen Ständer bekannt, wobei zur Verschaltung der Spulen Verbindungselemente, die ringförmig ausgebildet sind, vorgesehen sind. Diese ringförmig ausgebildeten Verbindungselemente sind radial oder axial benachbart und elektrisch isoliert voneinander angeordnet. Die Verbindung der einzelnen Spulenenden mit dem Verbindungsleitern erfolgt über in diesen ausgebildeten Öffnungen, durch die die Spulenenden hindurchgesteckt und anschließend befestigt werden. Auch bei dieser Lösung ist noch ein relativ hoher Platzbedarf erforderlich, da die Verschaltungsanordnung wiederum in axialer Richtung vor den Spulen angeordnet ist.

Ausgehend vom genannten Stand der Technik liegt der vorliegenden Erfindung die Aufgabe zugrunde, einen Stator für eine elektrische Maschine der eingangs genannten Art derart weiterzubilden, daß die oben beschrieben Nachteile vermieden werden. Insbesondere soll ein Stator für eine elektrische Maschine bereitgestellt werden, bei dem die Herstellung der einzelnen Komponenten sowie die Verschattung der Spulen automatisiert und damit kostengünstig erfolgen kann. Darüber hinaus soll der Stator besonders platzsparend ausgebildet sein. Insbesondere sollen auch die im Stator auftretenden Verluste minimiert werden. Des weiteren soll ein entsprechend verbessertes Verfahren zur Herstellung eines Stators bereitgestellt werden.

Die Aufgabe wird gemäß dem ersten Aspekt der vorliegenden Erfindung durch eine Weiterbildung des eingangs genannten Stators für eine elektrische Maschine gelöst, wobei der Stator erfindungsgemäß dadurch gekennzeichnet ist, daß die Verschaltungsanordnung innerhalb eines von den Statorspulen begrenzten Raums angeordnet ist, daß die Anschlüsse für die Enden der Statorspulen als Anschlußfortsätze ausgebildet sind, daß die Anschlußfortsätze zur Befestigung der Statorspulenenden in einem Winkel zum jeweiligen Verbindungsleiter abragend ausgebildet sind und daß eine Anzahl von Aussparungen für die Anschlußfortsätze vorgesehen ist, in die die Anschlußfortsätze hineinbiegbar sind oder hineingebogen werden.

Bei dem erfindungsgemäßen Stator ist es zunächst auf einfache und kostengünstige Weise möglich, die einzelnen Komponenten automatisiert herzustellen und änschließend eine automatisierte Verschaltung der einzelnen Spulen durchführen zu können. Gleichzeitig wird der Platzbedarf für die Verschaltungsanordnung und damit für den gesamten Stator erheblich reduziert.

Ein Grundgedanke der vorliegenden Erfindung besteht darin, daß die Statorspulen zunächst auf das Statorjoch aufgebracht werden. Anschließend werden die Verbindungsleiter in den von den Statorspulen begrenzten Raum eingebracht. Das bedeutet, daß die Verbindungsleiter einen Durchmesser aufweisen, der kleiner ist als der Durchmesser der von den Spulen eingegrenzten Fläche. Die einzelnen Verbindungsleiter liegen somit nicht mehr, wie dies im Hinblick auf die bekannten Lösungen beschrieben ist, in axialer Richtung vor den Spulen beziehungsweise deren Wickelköpfen. Vielmehr sind die Verbindungsleiter nunmehr koaxial zu den Statorspulen unterhalb beziehungsweise innerhalb von diesen angeordnet. Vorzugsweise haben die einzelnen Verbindungsleiter eine Breite, die den Wickelköpfein der einzelnen Spulen angepaßt ist, so daß die Verbindungsleiter weder in axialer noch in radialer Richtung über die Spulen hinausragen. Dadurch weist der Stator eine Breite auf, die nur durch die Spulengeometrie vorgegeben ist.

Die Enden der jeweiligen Spulen werden an den Anschlußfortsätzen befestigt. Dazu sind die Anschlußfortsätze zunächst in einem Winkel, vorzugsweise in einem Winkel von 90°, zum jeweiligen Verbindungsleiter abragend ausgebildet. Auf diese Weise ist eine einfache Verbindung der Spulenenden mit den Anschlußfortsätzen möglich.

Nach der Befestigung der Spulenenden werden die Anschlußfortsätze in entsprechende Aussparungen hineingebogen, die in den Verbindungsleitern vorgesehen sind. Dadurch wird nach dem Anschließen der Spulenenden an die Verbindungsleiter kein zusätzlicher Bauraum mehr benötigt.

Grundsätzlich ist die Erfindung nicht auf bestimmte Querschnitte der Verbindungsleiter beschränkt. Es hat sich jedoch als besonders vorteilhaft herausgestellt, die einzelnen Verbindungsleiter mit einem viereckigen Leiterquerschnitt auszubilden. Auf diese Weise lassen sich die einzelnen Verbindungsleiter auf einfache und genaue Weise ineinanderschieben.

Je nach Bedarf können die Anschlüsse zur Verbindung mit der elektrischen Maschine als Stecker, Hülsen, Steckerpins, Kabelschuhe oder dergleichen ausgebildet sein. Die Erfindung ist jedoch nicht auf die genannten Beispiele beschränkt, so daß auch andere Ausführungsformen für die Anschlüsse denkbar und möglich sind.

Beim erfindungsgemäßen Stator ist es nunmehr möglich, die einzelnen Komponenten zunächst auf einfache und kostengünstige Weise herzustellen. Anschließend können die einzelnen Spulen durch ein automatisiertes Verfahren verschaltet werden. Durch die besonders vorteilhafte Anordnung der Verschaltungsanordnung innerhalb des von den Statorspulen eingegrenzten Raums ist weiterhin eine besonders platzsparende Ausgestaltung des Stators möglich. Schließlich werden durch die erfindungsgemäße Ausgestaltung des Stators, insbesondere durch die Auswahl der Querschnitte für die Verbindungsleiter, auch mögliche Stromwärmeverluste minimiert.

Der Stator kann für jede mögliche Form von elektrischen Maschinen verwendet werden. Als elektrische Maschinen sind beispielsweise Synchronmaschinen, und hier insbesondere permanenterregte Synchronmaschinen, zu nennen. Eine besonders erwähnenswerte Maschine ist beispielsweise der Starter-Generator für Fahrzeuge. Hierbei handelt es sich um eine elektrische Maschine, deren Rotoren über die Kurbelwellenlagerung des Verbrennungsmotors gelagert sind. Der Starter-Generator wird nicht nur zum Starten und Stoppen des Verbrennungsmotors verwendet, sondern er kann auch während des Motorbetriebs verschiedene Funktionen übernehmen, wie beispielsweise Bremsfunktionen, Boosterfunktionen, Batteriemanagement, aktive Schwingungsdämpfung, Synchronisierung des Verbrennungsmotors oder dergleichen. Ein solcher Starter-Generator kann als Außenläufer-Synchronmaschine ausgebildet sein und über einen Statorträger als Trägerelement mit dem Motorblock des Verbrennungsmotors verbunden sein.

Bevorzugte Ausführungsformen des erfindungsgemäßen Stators ergeben sich aus den Unteransprüchen.

Vorteilhaft sind die Anschlußfortsätze im Bereich der Statorspulenenden ausgebildet. Dadurch sind besonders kurze Abstände zwischen den Anschlußfortsätzen und den Statorspulenenden möglich. Somit werden Fehler im Verschalten der Spulen eines Stranges verhindert. Die Spulen werden übersichtlich verschaltet, so daß auch ein möglicher Defekt in der Verschaltung der Spulen leicht lokalisierbar ist.

Vorzugsweise ist zwischen den Verbindungsleitern jeweils eine Isolierschicht vorgesehen. Die lsolierschicht kann vorteilhaft sehr dünn, beispielsweise als Isolierpapier, Isolierfolie oder dergleichen ausgebildet sein. Sie kann lose zwischen die einzelnen Verbindungsleiter gelegt, auf die Verbindungsleiter aufgeklebt oder auf andere Weise zwischen die Verbindungsleiter gebracht werden. Die Erfindung ist nicht auf bestimmte Ausgestaltungsformen der Isolierschicht sowie auf bestimmte Isoliermaterialien beschränkt.

In weiterer Ausgestaltung kann die Verschaltungsanordnung über eine Isolierschicht am Statorjoch angeordnet sein. Diese Isolierschicht kann beispielsweise als Isolierscheibe oder dergleichen ausgebildet sein.

Vorteilhaft sind die Statorspulenenden über eine Fügeverbindung und/oder eine mechanische Verbindung mit den Anschlußfortsätzen verbunden. So können die Spulenenden beispielsweise an die Anschlußfortsätze angelötet werden, etwa über ein Weichlöt- oder Hartlötverfahren. Es ist auch denkbar, die Spulenenden an die Anschlußfortsätze anzuschweißen. Besonders bevorzugte Schweißverfahren sind das Widerstandsschweißen, das Laserschweißen, das Ultraschallschweißen oder dergleichen. Als mechanische Verbindungen können beispielsweise Krimpverbindungen oder dergleichen verwendet werden.

Vorzugsweise sind die Anschlüsse zur Verbindung mit der elektrischen Maschine jeweils zwischen zwei benachbarten Statorspulen hindurchgeführt. Dazu können die Anschlüsse durch die bestehenden Lücken zwischen zwei benachbarten Statorspulen radial nach außen geführt werden, was zu einer weiteren Einsparung von axialem Bauraum führt.

Vorzugsweise sind die Verbindungsleiter aus einem Bandmaterial hergestellt. Auf diese Weise lassen sich die Verbindungsleiter besonders einfach und kostengünstig, auch mit Hilfe eines automatisierten Verfahrens, herstellen. Die einzelnen Verbindungsleiter, die aus einem Material wie Kupfer oder dergleichen hergestellt sein können, werden beispielsweise mittels eines geeignetes Walzverfahrens gewalzt und können anschließend zu Coils aufgewickelt werden. Die erforderlichen Aussparungen in den Verbindungsleitern sowie die Anschlußfortsätze können über geeignete Verfahren, wie beispielsweise Stanzverfahren, Schneideverfahren oder dergleichen in die Verbindungsleiter eingebracht werden.

In weiterer Ausgestaltung können einer oder mehrere der Verbindungsleiter eine oder mehrere Aussparungen zum Hindurchführen der Anschlüsse zur Verbindung mit der elektrischen Maschine aufweisen. Derartige Aussparungen sind erforderlich, da die Verbindungsleiter radial übereinander angeordnet sind und ein elektrischer Kontakt zwischen den Anschlüssen und jeweils benachbarten Verbindungsleitern verhindert werden muß.

Vorzugsweise kann die Verschaltungsanordnung drei Verbindungsleiter aufweisen.

Die Anzahl der Verbindungsleiter ergibt sich je nach Anwendungsfall und Ausführungsform des Stators. Ebenso kann bei verschiedenen Anwendungsbereichen des Stators auch die Anzahl der verwendeten Statorspulen variieren. Da jede der Statorspulen über zwei Anschlußfortsätze mit entsprechenden Verbindungsleitern verbunden ist, kann bei einer variierenden Anzahl von Statorspulen auch die Anzaht der Anschlußfortsätze und damit auch die Anzahl der Aussparungen für die Anschlußfortsätze bedarfsweise variieren.

Vorteilhaft können die Verbindungsleiter ringförmig oder ringsegmentförmig aus.gebildet sein. Damit können die Verbindungsleiter besonders vorteilhaft an die Geometrie des Stators und die Anordnungsgeometrie der Statorspulen angepaßt werden.

Gemäß einer bevorzugten Ausführungsform des erfindungsgemäßen Stators sind die Verbindungsleiter als geschlossene Ringstruktur ausgebildet, wobei die Endbereiche der Ringstrukturen als jeweilige Anschlüsse zur Verbindung mit der elektischen Maschine ausgebildet sind. Bei einer solchen Ausführungsform werden die einzelnen Verbindungsleiter zunächst hergestellt, beispielsweise als Bandmaterial, und anschließend auf die erforderliche Länge zugeschnitten. Danach werden die zunächst als Flachband vorliegenden Verbindungsleiter zu Ringstrukturen mit dem erforderlichen Durchmesser gebogen. Die Endbereiche der Ringsegmente können in einem gewünschten Winkel, beispielsweise senkrecht zum Verbindungsleiter, abgebogen werden und bilden dadurch einen jeweiligen Anschluß zur Verbindung mit der elektrischen Maschine. Vorteilhaft können die als Anschluß ausgebildeten Endbereiche über ein geeignetes Verfahren, beispielsweise ein Fügeverfahren oder dergleichen, miteinander verbunden werden, was zu einer Stabilitätserhöhung des ringförmigen Verbindungsleiters führt.

Gemäß einer anderen Ausführungsform der Erfindung können die Verbindungsleiter als offene Ringstrukturen ausgebildet sein, wobei die einzelnen Ringstrukturen jeweils eine unterschiedliche Länge aufweisen können. Weiterhin kann einer der Endbereiche einer jeweiligen Ringstruktur als Anschluß zur Verbindung mit der elektrischen Maschine ausgebildet sein. Durch eine derartige Ausgestaltung der einzelnen Verbindungselemente wird deren Herstellung weiter vereinfacht. Durch die Ausbildung als offene Ringstruktur und durch die Tatsache, daß die einzelnen Verbindungsleiter eine unterschiedliche Länge aufweisen, kann auf die Einformung von Aussparungen zum Hindurchführen der Anschlüsse verzichtet werden.

In noch einer weiteren Ausgestaltung der Erfindung können die Verbindungsleiter als geschlossene Ringe ausgebildet sein, wobei an den Ringen jeweils die Anschlüsse zur Verbindung mit der elektrischen Maschine angeordnet sind. Die Anschlüsse können jeweils in einer entsprechenden Aussparung in den Verbindung leitern angeordnet sein. Bei dieser Ausführungsform ist es nicht erforderlich, daß die jeweiligen Anschlüsse als besonders ausgebildete Endbereiche der Verbindungsleiter geformt sind. Vielmehr ist es möglich, die einzelnen Verbindungsleiter in Form von geschlossenen Ringen zunächst herzustellen und die Anschlüsse anschließend an den Verbindungsleitern zu befestigen. Vorteilhaft werden die Anschlüsse wiederum in entsprechend ausgebildeten Aussparungen an den Verbindungsleiter angeordnet. Dadurch wird wiederum ein Hindurchführen der Anschlüsse durch die jeweils benachbarte Verbindungsleiter möglich, ohne daß es zu einem elektrischen Kontakt zwischen den Anschlüssen und den jeweils benachbarten Verbindungsleitern kommen kann.

Vorteilhaft weisen die Statorspulen einen Wickelkopf und einen Isolierkörper auf und sind in Einzelzahnwickeltechnik hergestellt. Durch diese Herstellungsweise wird es möglich, daß die Spulen zunächst automatisch auf die jeweiligen Zähne aufgewickelt werden können. Die so fertiggestellte Spule wird dann mit dem Statorjoch verbunden.

Vorteilhaft kann die Verschaltungsanordnung mittels einer Fügeverbindung und/oder einer mechanischen Verbindung am Statorjoch oder am lsolierkörper der Statorspulen angeordnet sein. Diese Anordnung der Verschaltungsanordnung muß auf Grund des Eigengewichts der Verschaltungsanordnung und der in der elektrischen Maschine auftretenden Schwingungen vorgenommen werden. Diese Fixierung der Verschaltungsanordnung ist notwendig, da sonst die Spulenenden abreißen oder beschädigt werden können. Vorteilhaft kann die Verschaltungsanordnung, beziehungsweise die Verbindungsleiter der Schaltungsanordnung, durch ein Aufklipsen oder auch eine andere Art der mechanischen Befestigung, beispielsweise Schrauben, Nieten, Verschweißen oder dergleichen, an dem Statorjoch oder an den Isolierkörpern der Statorspulen angeordnet werden.

In weiterer Ausgestaltung kann der Stator imprägniert sein. Dadurch entsteht ein besonders festes Gebilde. Der Stator, beziehungsweise die einzelnen Komponenten des Stators können beispielsweise von einem Hochtemperatur-Gießharz umgeben sein, der elektrisch isolierend ist und eine Wärmeleitung zur Abführung der in den Statorspulen frei werdenden Verlustwärme unterstützt.

Gemäß dem zweiten Aspekt der vorliegenden Erfindung wird ein Verfahren zum Herstellen eines wie vorstehend beschriebenen erfindungsgemäßen Stators bereitgestellt, das erfindungsgemäß durch folgende Schritte gekennzeichnet ist:
a) Aufbringen der Statorspulen auf das Statorjoch;
b) Einbringen der Verschaltungsanordnung, die aus gegeneinander isolierten Verbindungsleitern gebildet ist, in einen von den Statorspulen begrenzten Raum, so daß die Verschaltungsanordnung weder in axialer noch in radialer Richtung über die Wickelköpfe der Statorspulen hinausragt;
c) Befestigen der Statorspulenenden an den Anschlußfortsätzen der Verbindungsleiter; und
d) Umbiegen der Anschlußfortsätze in die in den Verbindungsleitern dafür vorgesehenen Aussparungen.

Durch das erfindungsgemäße Verfahren wird eine einfache, kostengünstige und automatisierbare Verschaltung der einzelnen Statorspulen möglich. Zu den Vorteilen, Wirkungen, Effekten und der Funktionsweise des erfindungsgemäßen Verfahrens wird auf die vorstehenden Ausführungen zum erfindungsgemäßen Stator vollinhaltlich Bezug genommen und hiermit verwiesen.

Vorteilhafte Ausführungsformen des Verfahrens ergeben sich aus den Unteransprüchen.

Vorteithaft werden die Statorspulen in Einzelzahnwickeltechnik hergestellt.

In weiterer Ausgestaltung werden die Verbindungsleiter der Verschaltungsanordnung zunächst als Bandmaterial hergestellt und anschließend auf die gewünschte Länge zugeschnitten.

In weiterer Ausgestaltung werden die Statorspulenenden über eine Fügeverbindung und/oder eine mechanische Verbindung mit den Anschlußfortsätzen verbunden.

Vorzugsweise können die Anschlüsse zur Verbindung mit der elektrischen Maschine jeweils zwischen zwei benachbarten Statorspulen hindurchgeführt werden.

Vorteilhaft kann der Stator anschließend imprägniert werden.

Die Erfindung wird nun an Hand von Ausführungsbeispielen unter Bezugnahme auf die beiliegende Zeichnung näher erläutert. Es zeigen:
- Figur 1: eine perspektivische Explosionsansicht einer ersten Ausführungsform des erfindungsgemäßen Stators;
- Figur 2: einen Ausschnitt des Stators gemäß Figur 1 in zusammengebautem Zustand;
- Figur 3: eine Querschnittsansicht durch den Stator entlang der Schnittlinie III-III in Figur 2;
- Figur 4: eine perspektivische Explosionsansicht eines weiteren Ausführungsbeispiels des erfindungsgemäßen Stators;
- Figur 5: einen Ausschnitt des Stators gemäß Figur 4 in zusammengebautem Zustand;
- Figur 6: eine Querschnittsansicht durch den Stator entlang der Schnittlinie VI-VI in Figur 5;
- Figur 7: eine perspektivische Explosionsansicht noch einer weiteren Ausführungsform des erfindungsgemäßen Stators;
- Figur 8: einen Ausschnitt des Stators gemäß Figur 7 in zusammengebautem Zustand; und
- Figur 9: eine Querschnittansicht durch den Stator entlang der Schnittlinie IX-IX in Figur 8.

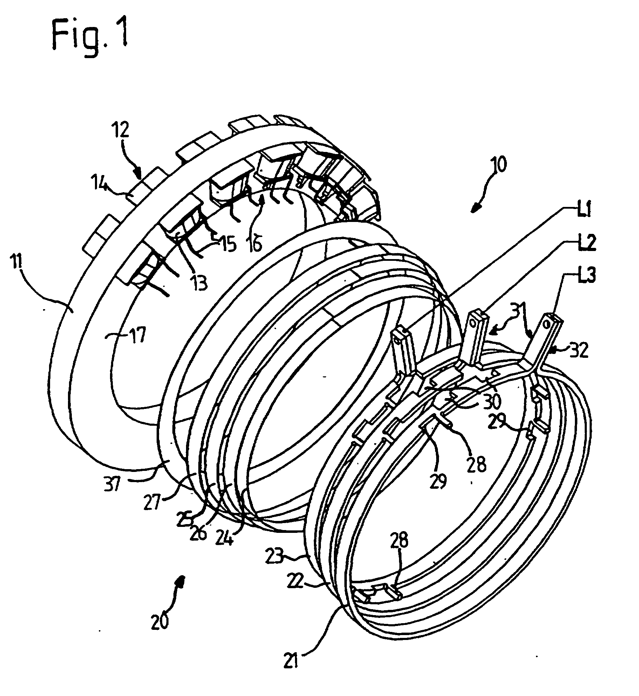

In den Figuren 1 bis 3 ist ein erstes Ausführungsbeispiel eines Stators 10 dargestellt, der als Stator für eine elektrische Maschine, insbesondere eine permanenterregte Synchronmaschine wie einen Starter-Generator für ein Fahrzeug, ausgebildet ist.

Der Stator 10 weist ein Statorjoch 11 auf, an dem eine Anzahl von Statorspulen 12 angeordnet sind. Die Statorspulen 12 weisen einen Wickelkopf 13 sowie einen Isolierkörper 14 auf. Die Enden der Statorspulenwicklungen werden jeweils durch Statorspulenenden 15 gebildet. Die Statorspulen 12 sind über den Umfang des Statorjochs 11 an diesem angeordnet und bilden dadurch einen durch die Statorspulen 12 begrenzten Raum 16. Dieser Raum 16 weist einen Durchmesser auf, der durch die Abstände der Statorspulen 12 und den Durchmesser des Statorjochs 11 gebildet wird. Die Höhe des Raums 16 ergibt sich durch die Wickelköpfe 13 der Statorspulen 12, das heißt durch diejenigen Bereiche der Wickelköpfe 13, die über das Statorjoch 11 hinausragen.

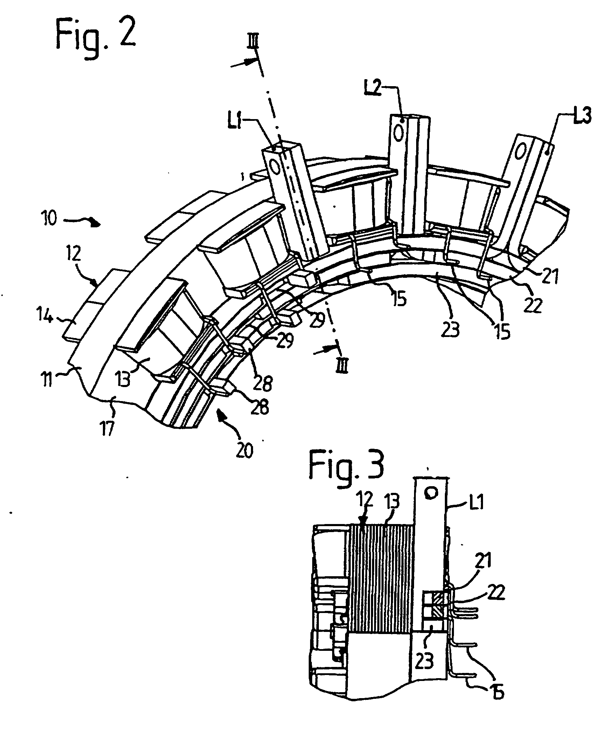

An einer Stirnseite 17 des Statorjochs 11 ist eine Verschaltungsanordnung 20 vorgesehen. Die Verschaltungsanordnung 20 weist drei als geschlossene Ringstruktur 31 ausgebildete Verbindungsleiter 21, 22, 23 auf. Die Verbindungleiter 21, 22, 23 sind aus einem Bandmaterial, beispielsweise Kupfer oder dergleichen, hergestellt und weisen jeweils einen unterschiedlichen Durchmesser auf. Im zusammengebauten Zustand des Stators 10 gemäß Figur 2 wird ersichtlich, daß die Verbindungsleiter 21, 22, 23 konzentrisch zueinander ausgebildet und damit radial übereinander angeordnet sind. Zwischen den einzelnen Verbindungsteitern 21, 22, 23 sind jeweils lsolierschichten 24, 25, 26, 27 vorgesehen, die im vorliegenden Ausführungsbeispiel aus Isolierpapier bestehen. Über die Isolierschichten wird ein elektrischer Kontakt zwischen den einzelnen Verbindungsleitern 21, 22, 23 verhindert. Die einzelnen Verbindungsleiter 21, 22, 23 sind über eine als Isolierscheibe ausgebildete Isolierschicht 37 an der Stirnseite 17 des Statorjochs 11 befestigt.

Zur Verschaltung der Spulenenden 15 mit den jeweiliggn Verbindungsleitern 21, 22, 23 sind an diesen eine Anzahl von Anschlußfortsätzen 28 vorgesehen. Die Anzahl der erforderlichen Anschlußfortsätze 28 ergibt sich aus der Anzahl der am Statorjoch 11 angeordneten Statorspulen 12. Jedes Statorspulenende 15 wird auf geeignete Weise, beispielsweise mittels einer Löt- oder Schweißverbindung, an einem der Anschlußfortsätze 28 befestigt.

Wie aus den Figuren 1 bis 3 ersichtlich ist, ragen die Anschlußfortsätze 28 dazu zunächst in einem Winkel, vorzugsweise in einem rechten Winkel, von den jeweiligen Verbindungsleitern 21, 22, 23 ab. Zur Minimierung des Platzbedarfs des Stators 10 sind im Bereich der Anschlußfortsätze 28 in den Verbindungsleitern 21, 22, 23 Aussparungen 29 vorgesehen, in die die Anschlußfortsätze 28 nach der Verschaltung mit den Statorspulenenden 15 hineingebogen werden können.

Die Endbereiche 32 der als geschlossene Ringstrukturen 31 ausgebildeten Verbindungsleiter 21, 22, 23 sind als Anschlüsse L1, L2, L3 zur Verbindung mit einer nicht dargestellten elektrischen Maschine ausgebildet. Dazu sind die Endbereiche 32 in entsprechender Weise hochgebogen.

Um einen elektrischen Kontakt zwischen den Anschlüssen L1, L2, L3 und den jeweils benachbarten Verbindungsleitern 21, 22, 23 zu verhindern, sind in den Verbindungsleitern 21, 22, 23 weiterhin entsprechende Aussparungen 30 vorgesehen. Durch diese Aussparung 30 eines jeden Verbindungsleiters werden die Anschlüsse jeweils benachbarter Verbindungsleiter hindurchgeführt, ohne daß es zu einem elektrischen Kontakt kommen kann.

Die einzeinen Endbereiche 32 der als geschlossene Ringstruktur 31 ausgebildeten Verbindungsleiter 21, 22, 23 sind derart gebogen, daß die Endbereiche 32 in ihrer Funktion als Anschlüsse L12, L2 L3 zur Verbindung mit der elektrischen Maschine durch Lücken zwischen zwei jeweils benachbarten Statorspulen 12 radial nach außen geführt werden können.

Der erfindungsgemäß ausgebildete Stator 10 ist somit besonders platzsparend realisierbar.

Nachfolgend wird nun ein Verfahren zur Herstellung eines solchen Stators 10 beschrieben.

Zunächst werden die einzelnen Statorspulen 12 durch ein geeignetes Herstellungsverfahren, beispielsweise mit Hilfe der Einzelzahnwickeltechnik, automatisch auf Einzelzähne gewickelt. Die so gewickelten Statorspulen 12 werden anschließend auf das Statorjoch 11 aufgebracht.

Die einzelnen Verbindungsleiter 21, 22, 23 können zunächst mit Hilfe eines geeigneten Verfahrens als Bandmaterial hergestellt werden. Anschließend werden die einzelnen Aussparungen 29, 30 sowie die Anschlußfortsätze 28 ausgebildet. Die Bänder werden auf die jeweils gewünschte Länge zugeschnitten und anschließend zu geschlossenen Ringstrukturen 31 gebogen. Danach werden deren Endbereiche 32 so umgebogen, daß sie die Anschlüsse L1, L2, L3 zur Verbindung mit der elektrischen Maschine bilden.

Die als geschlossene Ringstrukturen 31 ausgebildeten Verbindungsleiter 21, 22, 23 werden auf Grund ihres unterschiedlichen Durchmessers derart zusammengeschoben, daß sie konzentrisch ausgebildet und in radialer Richtung übereinander angeordnet sind. Zwischen die einzelnen Verbindungsleiter 21, 22, 23 werden entsprechende Isolierschichten 24, 25, 26, 27 eingebracht. Die auf diese Weise gebildete Anordnung wird unter die Wickelköpfe 13 der Statorspulen 12 geschobein. Dabei wird durch die erfindungsgemäße Ausgestaltung der Verschaltungsanordnung 20 erreicht, daß die einzelnen Verbindungsleiter 21, 22, 23 weder in axialer noch in radialer Richtung über die Wickelköpfe 13 der Statorspulen 12 hinausragen. Die Anschlüsse L1, L2, L3 werden durch die Lücken zwischen zwei benachbarten Statorspulen 12 radial nach außen geführt.

Anschließend werden die Spulenenden 15 an den Anschlußfortsätzen 28 befestigt, was beispielsweise über ein Löt- oder Schweißverfahren erfolgen kann. Danach werden die Anschlußfortsätze 28 in die Aussparungen 29 gebogen, so daß nach dem Anschließen der Spulenenden 15 kein axialer Bauraum mehr benötigt wird.

Der so fertiggestellte Stator 10 kann in einem nachfolgenden Verfahrensschritt imprägniert werden, wodurch ein festes Gebilde entsteht.

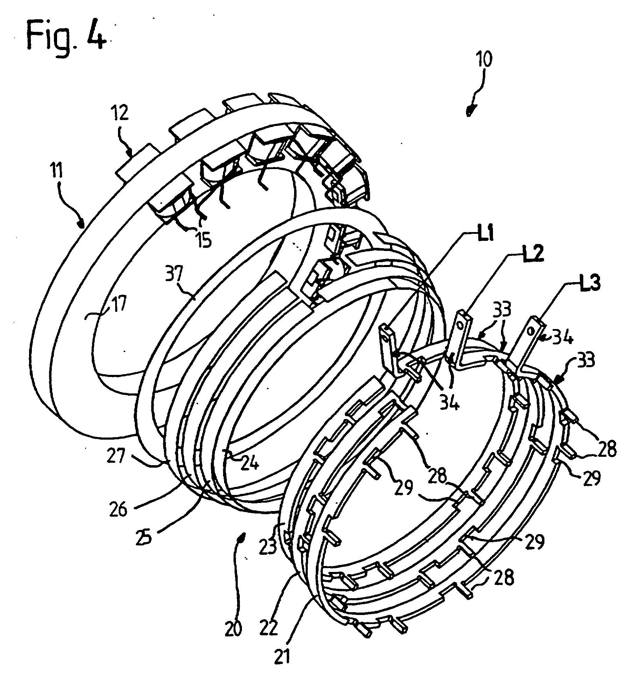

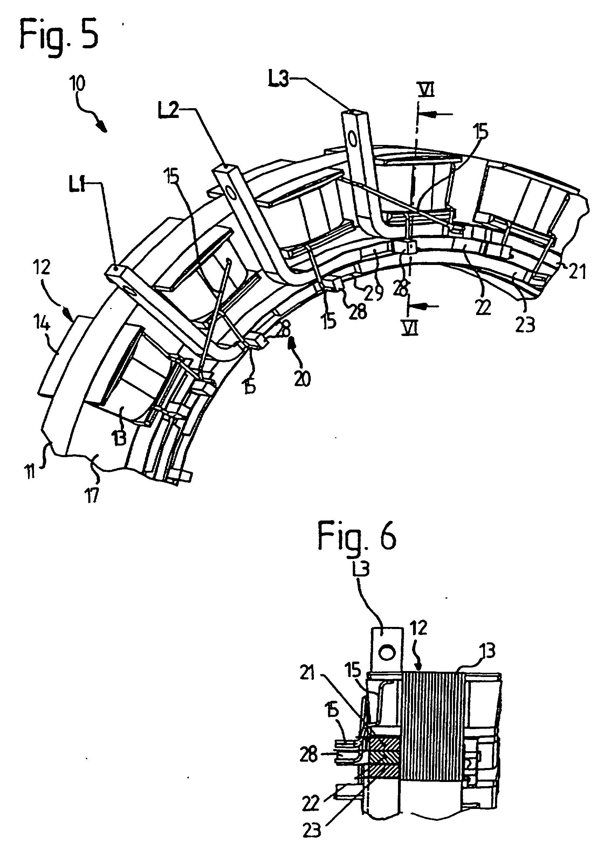

In den Figuren 4 bis 6 ist eine weitere Ausführungsform des erfindungsgemäßen Stators 10 dargestellt. Dabei werden solche Bauelemente, die baugleich mit entsprechenden Bauelementen der Ausführungsform gemäß den Figuren 1 bis 3 sind, mit identischen Bezugsziffern bezeichnet.

Der in den Figuren 4 bis 6 dargestellte Stator 10 weist einen im wesentlichen gleichen Aufbau wie der in bezug auf die Figuren 1 bis 3 beschriebene Stator 10 auf, so daß zur Vermeidung von Wiederholungen auf eine detaillierte Beschreibung des Statorjochs 11 und der Spulen 12 verzichtet wird.

Im Gegensatz zum Ausführungsbeispiel gemäß den Figuren 1 bis 3 weist die in den Figuren 4 bis 6 dargestellte Verschaltungsanordnung 20 Verbindungsleiter 21, 22, 23 auf, die in Form einer offenen Ringstruktur 33 ausgebildet sind. Die einzelnen Verbindungsleiter 21, 22, 23 weisen wiederum eine Anzahl von Anschlußfortsätzen 28 und Aussparungen 29 auf, über die die Statorspulenenden 15 mit den Verbindungsleitern 21, 22, 23 in der weiter oben bereits ausführlich beschriebenen Weise verbunden werden können.

Die Ausbildung der einzelnen Verbindungsleiter 21, 22, 23 als offene Ringstrukturen 33 hat den Vorteil, daß auf die Einformung besonderer Aussparungen zum Hindurchführen der Anschlüsse L1, L2, L3 verzichtet werden kann. Die einzelnen Verbindungsleiter 21, 22, 23 weisen wiederum jeweils einen unterschiedlichen Durchmesser auf. Zusätzlich dazu ist vorgesehen, daß die Verbindungsleiter 21, 22, 23 auch eine unterschiedliche Läge haben. Werden die Verbindungsleiter 21, 22, 23 nun zu Ringen gebogen, entstehen durch die unterschiedliche Länge der einzelnen Verbindungsleiter Freiräume, die die Funktion von Aussparungen übernehmen und durch die die Anschlüsse der jeweils benachbarten Verbindungsleiter hindurchgeführt werden können.

Wie aus den Figuren 4 bis 6 ersichtlich ist, müssen die Spulenenden 15 nicht immer auf kürzestem Wege mit entsprechenden Anschlußfortsätzen 28 verbunden werden. Allerdings ist auch in einer solchen Ausgestaltungsform die Länge der zu verschaltenden Spulenenden 15 immer noch so gering, daß eine übersichtliche Verschaltung der Spulen 12 gewährleistet ist.

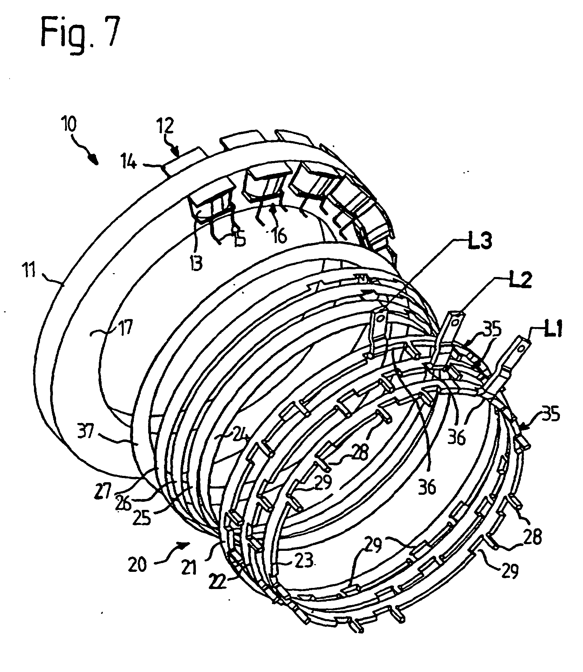

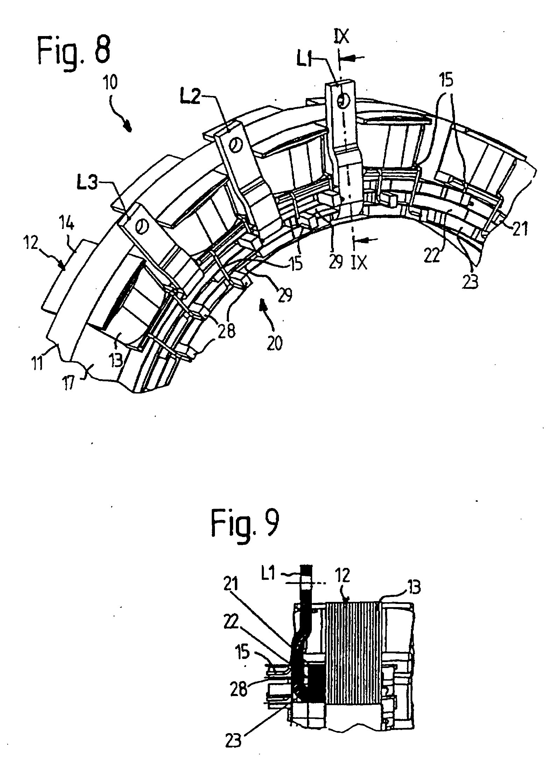

In den Figuren 7 bis 9 ist schließlich noch eine weitere Ausführungsform des erfindungsgemäßen Stators 10 dargestellt. Baugleiche Bauelemente sind wiederum mit identischen Bezugsziffern bezeichnet.

Im Gegensatz zu den in den Figuren 1 bis 6 dargestellten Ausführungsbeispielen weist der Stator 10 gemäß den Figuren 7 bis 9 eine Verschaltungsanordnung 20 auf, deren Verbindungsleiter 21, 22, 23 als geschlossene Ringe 35 ausgebildet sind. Die geschlossenen Ringe 35 weisen jeweils Aussparungen 36 auf, in denen die jeweiligen Anschlüsse L1, L2, L3 zur Verbindung mit einer elektrischen Maschine angeordnet sind. Die einzelnen Aussparungen 36 sind dabei derart ausgebildet, daß die Anschlüsse L1, L2, L3 durch jeweils benachbarte Verbindungsleiter 21, 22, 23 hindurchgeführt werden können, ohne daß es zu einem elektrischen Kontakt kommt.

Die Verwendung der einzelnen Ausführungsformen für die Verschaltungsanordnung 20 ergibt sich je nach Bedarf und Anwendungsfall. Es ist jedoch selbstverständlich, daß die Erfindung nicht auf die beschriebenen Beispiele beschränkt ist, so daß auch andere Ausgestaltungsformen der Verschaltungsanordnung 20 und des Stators 10 möglich sind.

## Patentansprüche

1. Stator für eine elektrische Maschine, mit einem Statorjoch (11), einer am Statorjoch (11) angeordneten Anzahl von Statorspulen (12) und einer an einer Stirnseite (17) des Statorjochs (11) angeordneten Verschaltungsanordnung (20) für die Statorspulen (12), wobei die Verschaltungsanordnung (20) elektrisch gegeneinander isolierte Verbindungsleiter (21, 22, 23) aufweist, die konzentrisch zueinander angeordnet sind und jeweils einen unterschiedlichen Durchmesser aufweisen und wobei die Verbindungsleiter (21, 22, 23) Anschlüsse (28; L1, L2, L3) für die Enden (15) der Statorspulen (12) sowie zur Verbindung mit der elektrischen Maschine aufweisen, **dadurch gekennzeichnet, daß** die Verschaltungsanordnung (20) innerhalb eines von den Statorspulen (12) begrenzten Raums (16) angeordnet ist, daß die Anschlüsse (28) für die Enden (15) der Statorspulen (12) als Anschlußfortsätze ausgebildet sind, daß die Anschlußfortsätze (28) zur Befestigung der Statorspulenenden (15) in einem Winkel zum jeweiligen Verbindungsleiter (21, 22, 23) abragend ausgebildet sind und daß eine Anzahl von Aussparungen (29) für die Anschlußfortsätze (28) vorgesehen ist, in die die Anschlußfortsätze 828) hineinbiegbar sind oder hineingebogen werden.

2. Stator nach Anspruch 1, **dadurch gekennzeichnet, daß** die Anschlußfortsätze (28) im Bereich der Statorspulenenden (15) ausgebildet sind.

3. Stator nach Anspruch 1 oder 2, **dadurch gekennzeichnet, daß** zwischen den Verbindungsleitern (21, 22, 23) jeweils eine Isolierschicht (24, 25, 26, 27) vorgesehen ist.

4. Stator nach einem der Ansprüche 1 bis 3, **dadurch gekennzeichnet, daß** die Verschaltungsanordnung (20) über eine Isolierschicht (37) am Statorjoch (11) angeordnet ist.

5. Stator nach einem der Ansprüche 1 bis 4, **dadurch gekennzeichnet, daß** die Statorspulenenden (15) über eine Fügeverbindung und/oder eine mechanische Verbindung mit den Anschlußfortsätzen (28) verbunden sind.

6. Stator nach einem der Ansprüche 1 bis 5, **dadurch gekennzeichnet, daß** die Anschlüsse (L1, L2, L3) zur Verbindung mit der elektrischen Maschine jeweils zwischen zwei benachbarten Statorspulen (12) hindurchgeführt sind.

7. Stator nach einem der Ansprüche 1 bis 6, **dadurch gekennzeichnet, daß** die Verbindungsleiter (21, 22, 23) aus einem Bandmaterial hergestellt sind.

8. Stator nach einem der Ansprüche 1 bis 7, **dadurch gekennzeichnet, daß** einer oder mehrere der Verbindungsleiter (21, 22, 23) eine oder mehrere Aussparungen (30) zum Hindurchführen der Anschlüsse (L1, L2, L3) zur Verbindung mit der elektrischen Maschine aufweisen.

9. Stator nach einem der Ansprüche 1 bis 8, **dadurch gekennzeichnet, daß** die Verschaltungsanordnung (20) drei Verbindungsleiter (21, 22, 23) aufweist.

10. Stator nach einem der Ansprüche 1 bis 9, **dadurch gekennzeichnet, daß** die Verbindungsleiter (21, 22, 23) ringförmig oder ringsegmentförmig ausgebildet sind.

11. Stator nach einem der Ansprüche 1 bis 10, **dadurch gekennzeichnet, daß** die Verbindungsleiter (21, 22, 23) als geschlossene Ringstrukturen (31) ausgebildet sind und daß die Endbereiche (32) der Ringstrukturen (31) als jeweilige Anschlüsse (L1, L2, L3) zur Verbindung mit der elektrischen Maschine ausgebildet sind.

12. Stator nach einem der Ansprüche 1 bis 10, **dadurch gekennzeichnet, daß** die Verbindungsleiter (21, 22, 23) als offene Ringstrukturen (33) ausgebildet sind, daß die einzelnen Ringstrukturen (33) jeweils eine unterschiedliche Länge aufweisen, und daß einer der Endbereiche (34) einer jeweiligen Ringstruktur (33) als Anschluß (L1, L2, L3) zur Verbindung mit der elektrischen Maschine ausgebildet ist.

13. Stator nach einem der Ansprüche 1 bis 10, **dadurch gekennzeichnet, daß** die Verbindungsleiter (21, 22, 23) als geschlossene Ringe (35) ausgebildet sind, daß an den Ringen (35) jeweils die Anschlüsse (L1, L2, L3) zur Verbindung mit der elektrischen Maschine angeordnet sind und daß die Anschlüsse (L1, L2, L3) jeweils in einer Aussparung (36) der Anschlußelemente (21, 22, 23) angeordnet sind.

14. Stator nach einem der Ansprüche 1 bis 13, **dadurch gekennzeichnet, daß** die Statorspulen (12) einen Wickelkopf (13) und einen Isolierkörper (14) aufweisen und in Einzelzahnwickeltechnik hergestellt sind

15. Stator nach einem der Ansprüche 1 bis 14, **dadurch gekennzeichnet, daß** die Verschaltungsanordnung (20) mittels einer Fügeverbindung und/oder einer mechanischen Verbindung am Statorjoch (11) oder einem Isolierkörper (14) der Statorspulen (12) angeordnet ist

16. Stator nach einem der Ansprüche 1 bis 15, **dadurch gekennzeichnet, daß** der Stator (10) imprägniert ist.

17. Verfahren zum Herstellen eines Stators nach einem der Ansprüche 1 bis 16, **gekennzeichnet durch** folgende Schritte:
a) Aufbringen der Statorspulen auf das Statorjoch;
b) Einbringen der Verschaltungsanordnung, die aus gegeneinander isolierten Verbindungsleitern gebildet ist, in einen von den Statorspulen begrenzten Raum, so daß die Verschaltungsanordnung weder in axialer noch in radialer Richtung über die Wickelköpfe der Statorspulen hinausragt;
c) Befestigen der Statorspulenenden an den Anschlußfortsätzen der Verbindungsleiter; und
d) Umbiegen der Anschlußfortsätze in die in den Verbindungsleitern dafür vorgesehenen Aussparungen.

18. Verfahren nach Anspruch 17, **dadurch gekennzeichnet, daß** die Statorspulen in Einzelzahnwickeltechnik hergestellt werden.

19. Verfahren nach Anspruch 17 oder 18, **dadurch gekennzeichnet, daß** die Verbindungsleiter der Verschaltungsanordnung zunächst als Bandmaterial hergestellt und anschließend auf die gewünschte Länge zugeschnitten werden.

20. Verfahren nach einem der Ansprüche 17 bis 19, **dadurch gekennzeichnet, daß** die Statorspulenenden über eine Fügeverbindung und/oder eine mechanische Verbindung an den Anschlußfortsätzen befestigt werden.

21. Verfahren nach einem der Ansprüche 17 bis 20, **dadurch gekennzeichnet, daß** die Anschlüsse zur Verbindung mit der elektrischen Maschine jeweils zwischen zwei benachbarten Statorspulen hindurchgeführt werden.

22. Verfahren nach einem der Ansprüche 17 bis 21, **dadurch gekennzeichnet, daß** der Stator anschließend imprägniert wird.

## Claims

1. Stator for an electrical machine, having a stator yoke (11), a number of stator coils (12) arranged on the stator yoke (11), and an interconnection arrangement (20), arranged on one end face (17) of the stator yoke (11), for the stator coils (12), in which case the interconnection arrangement (20) has connecting conductors (21, 22, 23) which are electrically insulated from one another, are arranged concentrically with respect to one another, and each have a different diameter, and in which case the connecting conductors (21, 22, 23) have connections (28; L1, L2, L3) for the ends (15) of the stator coils (12) and for connection to the electrical machine, **characterized in that** the interconnection arrangement (20) is arranged inside an area (16) which is bounded by the stator coils (12), **in that** the connections (28) for the ends (15) of the stator coils (12) are in the form of connection projections, **in that** the connection projections (28) are designed such that they project outwards in order to attach the stator coil ends (15) at an angle to the respective connecting conductor (21, 22, 23), and **in that** a number of cutouts (29) are provided for the connection projections (28), into which cutouts (29) the connection projections (28) can be bent or are bent.

2. Stator according to Claim 1, **characterized in that** the connection projections (28) are formed in the region of the stator coil ends (15).

3. Stator according to Claim 1 or 2, **characterized in that** an insulating layer (24, 25, 26, 27) is provided between each of the connecting conductors (21, 22, 23).

4. Stator according to one of Claims 1 to 3, **characterized in that** the interconnection arrangement (20) is arranged above an insulating layer (37) on the stator yoke (11).

5. Stator according to one of Claims 1 to 4, **characterized in that** the stator coil ends (15) are connected to the connection projections (28) via a jointed connection and/or a mechanical connection.

6. Stator according to one of Claims 1 to 5, **characterized in that** the connections (L1, L2, L3) for connection to the electrical machine are each passed through between two adjacent stator coils (12).

7. Stator according to one of Claims 1 to 6, **characterized in that** the connecting conductors (21, 22, 23) are produced from a strip material.

8. Stator according to one of Claims 1 to 7, **characterized in that** one or more of the connecting conductors (21, 22, 23) have one or more cutouts (30) for the connections (L1, L2, L3) to pass through for connection to the electrical machine.

9. Stator according to one of Claims 1 to 8, **characterized in that** the interconnection arrangement (20) has three connecting conductors (21, 22, 23).

10. Stator according to one of Claims 1 to 9, **characterized in that** the connecting conductors (21, 22, 23) are designed in the form of a ring or in the form of a ring segment.

11. Stator according to one of Claims 1 to 10, **characterized in that** the connecting conductors (21, 22, 23) are designed as closed ring structures (31), and **in that** the end regions (32) of the ring structures (31) are designed as respective connections (L1, L2, L3) for connection to the electrical machine.

12. Stator according to one of Claims 1 to 10, **characterized in that** the connecting conductors (21, 22, 23) are designed as open ring structures (33), **in that** the individual ring structures (33) each have a different length, and **in that** one of the end regions (34) of a respective ring structure (33) is designed as a connection (L1, L2, L3) for connection to the electrical machine.

13. Stator according to one of Claims 1 to 10, **characterized in that** the connecting conductors (21, 22, 23) are designed as closed rings (35), **in that** the connections (L1, L2, L3) for connection to the electrical machine are each arranged on the rings (35), and **in that** the connections (L1, L2, L3) are each arranged in a cutout (36) in the connecting elements (21, 22, 23).

14. Stator according to one of Claims 1 to 13, **characterized in that** the stator coils (12) have an end winding (13) and an insulating body (14), and are produced using the individual tooth winding technique.

15. Stator according to one of Claims 1 to 14, **characterized in that** the interconnection arrangement (20) is arranged, by means of a jointed connection and/or a mechanical connection, on the stator yoke (11) or on an insulating body (14) of the stator coils (12).

16. Stator according to one of Claims 1 to 15, **characterized in that** the stator (10) is impregnated.

17. Method for production of a stator according to one of Claims 1 to 16, **characterized by** the following steps:
a) fitting of the stator coils to the stator yoke;
b) introduction of the interconnection arrangement, which is formed from connecting conductors which are insulated from one another, into an area which is bounded by the stator coils, so that the interconnection arrangement does not project either in the axial direction or in the radial direction beyond the end windings of the stator coils;
c) attachment of the stator coil ends to the connection projections of the connecting conductors; and
d) bending of the connection projections into the cutouts provided for this purpose in the connecting conductors.

18. Method according to Claim 17, **characterized in that** the stator coils are produced using the individual tooth winding technique.

19. Method according to Claim 17 or 18, **characterized in that** the connecting conductors of the interconnection arrangement are initially produced as strip material and are then cut to the desired length.

20. Method according to one of Claims 17 to 19, **characterized in that** the stator coil ends are attached to the connection projections via a jointed connection and/or a mechanical connection.

21. Method according to one of Claims 17 to 20, **characterized in that** the connections for connection to the electrical machine are each passed through between two adjacent stator coils.

22. Method according to one of Claims 17 to 21, **characterized in that** the stator is subsequently impregnated.

## Revendications

1. Stator pour une machine électrique, avec une armature de stator (11), un certain nombre de bobines de stator (12) disposées sur l'armature de stator (11) et un dispositif de câblage (20) pour les bobines de stator (12) disposé sur une face frontale (17) de l'armature de stator (11), le dispositif de câblage (20) présentant des conducteurs de liaison (21, 22, 23) électriquement isolés l'un de l'autre, qui sont disposés de façon concentrique l'un par rapport à l'autre et qui présentent chacun un diamètre différent, et les conducteurs de liaison (21, 22, 23) comportant des raccords (28; L1, L2, L3) pour les extrémités (15) des bobines de stator (12) ainsi que pour le raccordement à la machine électrique, **caractérisé en ce que** le dispositif de câblage (20) est disposé à l'intérieur d'un espace (16) délimité par les bobines de stator (12), **en ce que** les raccords (28) pour les extrémités (15) des bobines de stator (12) sont formés par des prolongements de raccordement, **en ce que** les prolongements de raccordement (28) sont formés en saillie pour la fixation des extrémités (15) des bobines de stator sous un certain angle par rapport au conducteur de liaison respectif (21, 22, 23) et **en ce qu'**il est prévu un nombre d'évidements (29) pour les prolongements de raccordement (28), dans lesquels les prolongements de raccordement (28) peuvent être ou sont repliés vers l'intérieur.

2. Stator selon la revendication 1, **caractérisé en ce que** les prolongements de raccordement (28) sont formés dans la région des extrémités (15) des bobines de stator.

3. Stator selon la revendication 1 ou 2, **caractérisé en ce qu'**il est prévu chaque fois une couche isolante (24, 25, 26, 27) entre les conducteurs de liaison (21, 22, 23).

4. Stator selon l'une quelconque des revendications 1 à 3, **caractérisé en ce que** le dispositif de câblage (20) est disposé sur l'armature de stator (11) par l'intermédiaire d'une couche isolante (37).

5. Stator selon l'une quelconque des revendications 1 à 4, **caractérisé en ce que** les extrémités (15) des bobines de stator sont reliées aux prolongements de raccordement (28) par un assemblage soudé et/ou par un assemblage mécanique.

6. Stator selon l'une quelconque des revendications 1 à 5, **caractérisé en ce que** les raccords (L1, L2, L3) destinés au raccordement à la machine électrique sont chaque fois insérés entre deux bobines de stator adjacentes (12).

7. Stator selon l'une quelconque des revendications 1 à 6, **caractérisé en ce que** les conducteurs de liaison (21, 22, 23) sont fabriqués à partir d'une matière en bande.

8. Stator selon l'une quelconque des revendications 1 à 7, **caractérisé en ce qu'**un ou plusieurs des conducteurs de liaison (21, 22, 23) présentent un ou plusieurs évidements (30) pour insérer les raccords (L1, L2, L3) destinés au raccordement à la machine électrique.

9. Stator selon l'une quelconque des revendications 1 à 8, **caractérisé en ce que** le dispositif de câblage (20) comporte trois conducteurs de liaison (21, 22, 23).

10. Stator selon l'une quelconque des revendications 1 à 9, **caractérisé en ce que** les conducteurs de liaison (21, 22, 23) sont réalisés en forme d'anneau ou en forme de segment d'anneau.

11. Stator selon l'une quelconque des revendications 1 à 10, **caractérisé en ce que** les conducteurs de liaison (21, 22, 23) sont réalisés sous la forme de structures annulaires fermées (31), et **en ce que** les régions d'extrémité (32) des structures annulaires (31) forment les raccords respectifs (L1, L2, L3) destinés au raccordement à la machine électrique.

12. Stator selon l'une quelconque des revendications 1 à 10, **caractérisé en ce que** les conducteurs de liaison (21, 22, 23) sont réalisés sous la forme de structures annulaires ouvertes (33), **en ce que** les diverses structures annulaires (33) présentent chacune une longueur différente, et **en ce qu'**une des régions d'extrémité (34) d'une structure annulaire respective (33) forme un raccord (L1, L2, L3) destiné au raccordement à la machine électrique.

13. Stator selon l'une quelconque des revendications 1 à 10, **caractérisé en ce que** les conducteurs de liaison (21, 22, 23) ont la forme d'anneaux fermés (35), **en ce que** les raccords (L1, L2, L3) destinés au raccordement à la machine électrique sont chaque fois disposés sus les anneaux (35) et **en ce que** les raccords (L1, L2, L3) sont chaque fois disposés dans un évidement (36) des éléments de raccordement (21, 22, 23).

14. Stator selon l'une quelconque des revendications 1 à 13, **caractérisé en ce que** les bobines de stator (12) présentent une tête de bobine (13) et un corps isolant (14) et sont fabriquées par la technique de bobinage à dent unique.

15. Stator selon l'une quelconque des revendications 1 à 14, **caractérisé en ce que** le dispositif de câblage (20) est disposé sur l'armature de stator (11) ou sur un corps isolant (14) des bobines de stator (12) au moyen d'un assemblage soudé et/ou d'un assemblage mécanique.

16. Stator selon l'une quelconque des revendications 1 à 15, **caractérisé en ce que** le stator (10) est imprégné.

17. Procédé pour fabriquer un stator selon l'une quelconque des revendications 1 à 16, **caractérisé par** les opérations suivantes:
a) pose des bobines de stator sur l'armature de stator;
b) introduction du dispositif de câblage, qui est formé de conducteurs de liaison isolés les uns des autres, dans un espace délimité par les bobines de stator, de telle façon que le dispositif de câblage ne dépasse ni en direction axiale ni en direction radiale au-delà des têtes de bobine des bobines de stator;
c) fixation des extrémités des bobines de stator aux prolongements de raccordement des conducteurs de liaison; et
d) rabattement des prolongements de raccordement dans les évidements prévus à cet effet dans les conducteurs de liaison.

18. Procédé selon la revendication 17, **caractérisé en ce que** les bobines de stator sont fabriquées par la technique du bobinage à dent unique.

19. Procédé selon la revendication 17 ou 18, **caractérisé en ce que** les conducteurs de liaison du dispositif de câblage sont fabriqués d'abord en une bande de matière et sont ensuite coupés à la longueur désirée.

20. Procédé selon l'une quelconque des revendications 17 à 19, **caractérisé en ce que** les extrémités des bobines de stator sont fixées aux prolongements de raccordement par un assemblage soudé et/ou par un assemblage mécanique.

21. Procédé selon l'une quelconque des revendications 17 à 20, **caractérisé en ce que** les raccords destinés au raccordement à la machine électrique sont chaque fois insérés entre deux bobines de stator adjacentes.

22. Procédé selon l'une quelconque des revendications 17 à 21, **caractérisé en ce que** le stator est ensuite imprégné.
